# EUROPÄISCHE PATENTSCHRIFT

(11) **EP 2 389 813 B1**
(45) Veröffentlichungstag und Bekanntmachung des Hinweises auf die Patenterteilung: **14.05.2014**
(21) Anmeldenummer: 11004196.9
(22) Anmeldetag: 20.05.2011
(51) Int. Cl.: A23L 3/3445, A23L 3/3463, A23L 3/3472, A23L 3/358, A23L 3/015, A23L 3/3418, A23B 4/02, A23B 4/10, A23B 4/16, A23B 4/18, A23B 4/28

(54) **Verfahren zur Behandlung von Lebensmittel**
Method for treating food
Procédé de traitement d'aliments

(30) Priorität: 31.05.2010 DE 102010022271
(43) Veröffentlichungstag der Anmeldung: 30.11.2011
(73) Patentinhaber: Food Concept AG, 4616 Kappel (CH)
(72) Erfinder: Gareis, Manfred, Dr., Dr., 95349 Thurnau (DE); Pichner, Rohtraud, Dr., 95336 Mainleus (DE); Kabisch, Jan, 96050 Bamberg (DE); Zitzekmann, Bernd, 95478 Kemnath (DE); Verhaag, Hubert, 47623 Kevelaer (DE); Friederix, Patrick, 47929 Grefrath (DE)
(74) Vertreter: Pellkofer, Dieter

(56) Entgegenhaltungen:
- WO-A1-92/18011
- CN-Y- 201 286 309
- HAC-SZYMANCZUK ELZBIETA ET AL.: "Influence of high pressure on quality and stability of raw-smoked pork loin with diferent amounts of curing agents", MEDYCYNA WETERYNARYJNA, Bd. 59, Nr. 7, 2003, Seiten 634-638, XP009150381, ISSN: 0025-8628
- ZLENDER B ET AL: "Traditional Methods in Meat Processing and Possibility of their Application in Modern Industrial technologies", TEHNOLOGIJA MESA, BEOGRAD, YU, Bd. 45, Nr. 3-4, 1. Januar 2004 (2004-01-01), Seiten 81-88, XP009150321, ISSN: 0494-9846

## Beschreibung

Die vorliegende Erfindung betrifft ein Verfahren zur Behandlung von Lebensmitteln wie Frischfleisch, Fleischwaren, Fleischerzeugnissen, Fleischzubereitungen und Fisch, bei dem das Lebensmittel an seiner Oberfläche mit einem oder mehreren Zusatzstoffen versehen wird, welche zum Eindringen in das Innere des Lebensmittels vorgesehen sind. Weiterhin betrifft die Erfindung ein Verfahren zur Behandlung von solchen Lebensmitteln, bei dem Teilbereiche im Inneren des Lebensmittels mit einem oder mehreren Zusatzstoffen versehen werden, welche zum Verteilen im Inneren des Lebensmittels vorgesehen sind, wie beansprucht.

Derartige Verfahren sind beispielsweise Verfahren zum Konservieren von Lebensmitteln wie beispielsweise Pökelverfahren. Zusätzlich oder alternativ zu einer Konservierung können solche Verfahren jedoch auch beispielsweise verwendet werden, um den Geschmack des Lebensmittels, beispielsweise durch Aufbringen einer Marinade, zu verbessern. Bei der Konservierung durch Pökeln sind unterschiedliche Verfahren bekannt. Bei der Trockenpöklung werden beispielsweise die zu behandelnden Lebensmittel mit Kochsalz und/oder Nitritpökelsatz oder einem Gemisch aus beiden sowie Salpeter, Zucker und Gewürzen trocken eingerieben. Für das Einmassieren der Zusatzstoffmischung können beispielsweise so genannte Kühltumbler verwendet werden. Nachteilig an diesem Verfahren sind zum einen die Notwendigkeit eines Tumblers sowie die erforderliche Pökeldauer, die mindestens 2 bis 2,5 Tage/kg Fleisch beträgt. Erst wenn die Zusatzstoffe in das Innere des Fleischs diffundiert sind, kann aufgrund der aw-Wert-Absenkung (Absenkung der Wasseraktivität) das Produkt als mikrobiologisch stabilisiert betrachtet werden.

Bei der Nasspökelung werden die Fleischstücke in eine Pökellake eingelegt, die sämtliche für eine Umrötung erforderlichen Pökelstoffe enthält. Die Pökeldauer beträgt ca. 2 Tage/kg Fleisch. Zur Herstellung von schnell gereiften Rohpökelwaren wird die Spritzpökelung angewendet, d.h. die Pökellake wird direkt mit Hilfe von Injektoren in das Muskelfleisch eingespritzt. Durch die Injektion steigt jedoch das Risiko einer mikrobiellen Kontamination, zum einen durch die Verletzung der Muskeloberfläche (Einwanderung der Bakterien entlang des Stichkanals) und zum anderen durch kontaminierte Pökelinjektoren. Durch das Einspritzen der Pökellake werden die umliegenden Zellen zerstört und es kommt zum Tropfsaftaustritt. Dies kann wiederum eine mikrobielle Siedlung begünstigen. Des Weiteren wird durch Spritzpökelung der a_{w}-Wert im Fleisch durch das Fremdwasser angehoben, was ebenfalls zu einer Senkung der mikrobiellen Stabilität des Fleisches beiträgt.

WO 92/18011 A1 offenbart ein Verfahren zum Pökeln von Fleisch, in dem Pökel hinzugegeben wird, bevorzugt durch Injektion, und gleichzeitig Ultraschallbehandlung und Druckbehandlung (abwechselnd Vakuum und Überdruck) durchgeführt werden. Während der Überdruckbehandlung werden inerte Gase, wie Kohlendioxid und Stickstoff, hinzugegeben. Dadurch wird die Fleischqualität verbessert und das Pökelverfahren beschleunigt.

CN 201 286 309 Y offenbart ein Verfahren zum Pökeln von Fleisch in einem luftdicht verschließbaren Raum, in dem Pökel hinzugegeben wird, und eine Überdruckbehandlung durchgeführt wird. Dadurch wird die Fleischqualität verbessert und das Eindringen des Pökels intensiviert.

HAC-SZYMANCZUK ELZBIETA ET AL.: "Influence of high pressure on quality and stability of raw-smoked pork loin with diferent amounts of curing agents",MEDYCYNA WETERYNARYJNA, Bd. 59, Nr. 7, 2003, Seiten 634-638, ISSN: 0025-8628 offenbart ein Verfahren zum Pökeln von Schweinefleisch, in dem Pökel hinzugegeben wird, das Fleisch portioniert wird, vakuumverpackt wird, einer Überdruckbehandlung (500 MPa, 30 Minuten, 40°C) unterzogen wird, und dann bei 4-6°C gelagert wird. Die Überdruckbehandlung erlaubte eine Verbesserung der Lagerfähigkeit bei einem geringeren Einsatz von Pökel.

ZLENDER B ET AL: "Traditional Methods in Meat Processing and Possibility of their Application in Modern Industrial technologies",TEHNOLOGIJA MESA, BEOGRAD, YU, Bd. 45, Nr. 3-4, 1. Januar 2004 (2004-01-01), Seiten 81-88, ISSN: 0494-9846 offenbart, dass Pökelinjektion, Überdruck- und Ultraschallbehandlung das Pökeln von Fleischprodukte beschleunigen, und dass diese Verfahren bevorzugt kombiniert angewendet werden.

Es ist eine Aufgabe der vorliegenden Erfindung, ein Verfahren zur Behandlung von Lebensmitteln der eingangs genannten Art anzugeben, das eine kürzere Behandlungszeit ermöglicht. Insbesondere soll auch eine schonendere Behandlung des Lebensmittels möglich sein.

Erfindungsgemäß wird diese Aufgabe in einer ersten Ausführungsform gelöst durch ein Verfahren zur Behandlung von Lebensmitteln wie Frischfleisch, Fleischwaren, Fleischerzeugnissen, Fleischzubereitungen und Fisch, bei dem das Lebensmittel an seiner Oberfläche mit einem oder mehreren Zusatzstoffen versehen wird, welche zum Eindringen in das Innere des Lebensmittels vorgesehen sind, wobei das mit den Zusatzstoffen versehene Lebensmittel in einem luftdicht verschließbaren Raum in einer von der Außenatmosphäre verschiedenen Gasatmosphäre während einer vorgegebenen Zeit gelagert wird, wobei während der Lagerung in dem luftdicht verschließbaren Raum ein über dem Atmosphärendruck liegender Druck aufgebaut wird, durch den ein zumindest teilweises Eindringen der Zusatzstoffe in das Innere des Lebensmittels erfolgt, wie beansprucht.

Erfindungsgemäß wird durch Aufbau eines hohen Drucks erreicht, dass die Zusatzstoffe schneller und gleichmäßiger in das Innere des Lebensmittels eindringen bzw. sich im Inneren des Lebensmittels schneller und gleichmäßiger verteilen. Mit dem erfindungsgemäßen Verfahren lassen sich gleiche Ergebnisse wie bei herkömmlichen Verfahren in beispielsweise 50 % verkürzter Behandlungszeit erreichen. Übliche zusätzliche Verfahrensschritte wie Tumbeln und Nasspökeln, die hygienische Risiken bergen, können entfallen und durch die Druckbehandlung partiell oder vollständig ersetzt werden.

Gegenüber der Verwendung eines Tumblers sind der Produktions- und Energieaufwand sowie die Kontaminationsgefahr deutlich verringert. Falls die Zusatzstoffe durch den Druck über die Oberfläche in das Innere des Lebensmittels eingebracht werden, können die beim Spritzpökeln verwendeten Injektoren entfallen, so dass eine schonendere Behandlung erreicht wird. Ohne Verwendung von Injektoren erfolgt keine Verletzung des Fleisches, so dass sowohl die Kontaminierungsgefahr verringert wird als auch eine hohe Wasserbindung gewährleistet ist.

Aufgrund dieser erhöhten Wasserbindung kann bei dem erfindungsgemäßen Verfahren auf die Zugabe von Phosphaten oder sonstigen Zusatzstoffen, die die Wasserbindung erhöhen, verzichtet werden. Zusätzlich kann beispielsweise die Menge des verwendeten Nitritpökelsalzes verringert werden, ohne die durch diese Zusatzstoffe erzielten technologischen Effekte, wie Haltbarkeit, Umrötung und Aromabildung zu verschlechtern.

Nach einer vorteilhaften Ausführungsform der Erfindung werden sowohl die Oberfläche als auch die Teilbereiche im Inneren des Lebensmittels mit den Zusatzstoffen versehen. Auf diese Weise kann eine noch schnellere Durchdringung des gesamten Lebensmittels mit den Zusatzstoffen erreicht werden.

Der Druck wird so hoch gewählt, dass das Lebensmittel im Wesentlichen vollständig von den Zusatzstoffen durchdrungen wird. Dabei kann der Druck über die Lagerungszeit im Wesentlichen konstant gehalten oder variiert werden. Durch die vollständige Durchdringung kann eine mikrobiologische Stabilisierung des Lebensmittels erreicht werden, insbesondere wird dabei der aw-Wert unter einen vorgegebenen Grenzwert, wie beispielsweise 0,960 abgesenkt, wodurch das Wachstum von Bakterien oder sonstigen Mikroorganismen verringert oder vollständig aufgehalten wird.

Nach einer weiteren vorteilhaften Ausführungsform der Erfindung erfolgen der Aufbau und/oder der Abbau des Drucks und/oder gegebenenfalls die Variation des Drucks so langsam, dass keine Zerstörung von Zellen des Lebensmittels auftritt. Dadurch ist gewährleistet, dass die Tropfsaftverluste sehr niedrig sind und sich die Wasseraktivitätswerte nicht erhöhen. Dadurch kann insbesondere auch die Menge des verwendeten Nitritpökelsalzes verringert werden. Auch die verwendete Phosphatmenge kann verringert werden oder vollständig entfallen.

Nach einer weiteren bevorzugten Ausführungsform der Erfindung wird die Gasatmosphäre in dem Raum auf einen Überdruck gegenüber dem Atmosphärendruck von mehr als ca. 3 bar (300 kPa), insbesondere von mehr als ca. 6 bar (600 kPa), vorzugsweise von mehr als ca. 10 bar (1 MPa), vorteilhaft von mehr als ca. 15 bar (1,5 MPa) gebracht. Erst durch diese entsprechend hohen Druckwerte wird ein vollständiges Durchdringen des Lebensmittels mit den Zusatzstoffen erreicht, wodurch insbesondere bei Kühltemperaturen von beispielsweise ≤ 5°C das Wachstum pathogener/toxinproduzierender Keime vermieden wird.

Vorteilhaft umfasst die Gasatmosphäre in dem Raum zumindest als Hauptbestandteil oder ausschließlich ein Schutzgas, insbesondere Sauerstoff, Stickstoff, Kohlendioxid, Schwefeldioxid, Argon, Helium, Wasserstoff, Distickstoffmonoxid oder eine Kombination von zwei oder mehreren dieser Gase. Je nach Anwendungsfall kann somit die Gasatmosphäre entsprechend gewählt werden. Beispielsweise kann bei rohen Pökelerzeugnissen, wie beispielsweise Rohschinken, bevorzugt eine Stickstoffatmosphäre verwendet werden, während bei Kochpökelware beispielsweise eine Sauerstoffatmosphäre bevorzugt ist.

Bevorzugt umfassen die Zusatzstoffe Kochsalz, Nitritpökelsalz, Salpeter, Zucker, Kräuter, Gewürze, Pflanzenextrakte, Öl, Aromen oder eine Kombination von zwei oder mehreren dieser Stoffe. Insbesondere können die Zusatzstoffe auch durch eine Marinade gebildet werden. Dabei ist es vorteilhaft, wenn die Zusatzstoffe im Wesentlichen frei von Phosphaten oder sonstigen die Wasserbindung erhöhenden Stoffen sind.

Nach einer weiteren Ausführungsform der Erfindung wird nach der Lagerung das Lebensmittel einer weiteren Verarbeitung unterzogen, insbesondere geräuchert, gebraten, gekocht oder eingelegt. Eine solche weitere Verarbeitung ist je nach verwendeten Lebensmitteln sinnvoll. So können beispielsweise Lachsschinken und Räucherbauch einer nachträglichen Räucherung unterzogen werden, während Schweinehaxen und Kochschinken im Anschluss gekocht bzw. gebraten werden. Bierschinkenwürfel können beispielsweise als grobes Einlagefleisch für Brühwürste Verwendung finden, während Rohschinken beispielsweise nach der Druckbehandlung geräuchert wird. Auch eine Bearbeitung vor der Druckbehandlung ist möglich, wie z.B. bei Roastbeef, das vor der Druckbehandlung gekocht wird.

Vorteilhaft beträgt die Dauer der Druckbehandlung ca. zwischen 2 und 48 Stunden, insbesondere ca. zwischen 5 und 30 Stunden. Die Dauer ist dabei wiederum von dem zu behandelnden Lebensmittel abhängig und kann beispielsweise gemäß den beiden folgenden Tabellen durchgeführt werden, in denen rein beispielhaft Sauerstoff als verwendetes Gas angegeben ist.

**Tabelle 1: Beispiele for die einmalige Behandlung von Rohpökelware im Sauerstoff-Hochdruckgerät**

| **Produktbeispiele** | **Dauer der Anwendung** | **Weiterverarbeitung** |
|---|---|---|
| Lachsschinken | 15 Stunden | 2 Stunden kalt räuchern |
| Räucherbauch | 15 Stunden | 4 Stunden kalt räuchern |
| Schweinehaxen | 10 Stunden | Kochen oder Braten |
| Bierschinkenwürfel | 5 Stunden | Verwendung als grobes Eintagefleisch für Brühwürste |

**Tabelle 2: Beispiel für die alternierende Anwendung von Reifung und Sauerstoff-Hochdruckbehandlung bei langgereiften Rohschinken**

| **Produkt** | **Anwendung** | **Parameter** | **Zeit** |
|---|---|---|---|
| Rohschinken | Trockensalzen | | < 1 Stunde |
| | Reifung in der Reifekammer | 7 °C, 90 % rF | 7 Tage |
| | Sauerstoff-Hochdruckbehandlung | 2°C. | 16 Stunden |
| | Reifung in der Reifekammer | 7 °C, 90 % rF | 7 Tage |
| | Sauerstoff-Hochdruckbehandlung | 2°C. | 16 Stunden |
| | Reifung in der Reifekammer | 7°C, 90 % rF | 7 Tage |
| | sauerstoff-Hochdruckbehandlung | 2 °C. | 16 Stunden |
| | Reifung in der Reifekammer | 7°C, 90 % rF | 7 Tage |
| | Räucherung | Kalt räuchern | 3 Tage |

Nach einer weiteren vorteilhaften Ausführungsform der Erfindung wird das Lebensmittel mehreren erfindungsgemäßen Druckbehandlungen unterzogen, die zeitlich voneinander getrennt sind. Dabei kann zwischen den einzelnen Druckbehandlungen jeweils ein Reifungszwischenschritt, insbesondere in einer Reifekammer vorgesehen sein. Die Dauer der Reifungszwischenschritte kann dabei beispielsweise zwischen ca. 1 und 14 Tagen, insbesondere ca. zwischen 5 und 10 Tagen, bevorzugt ca. 7 Tage betragen. Die Anzahl sowie die Art und die Dauer der Zwischenschritte sind wiederum von der Anwendung abhängig und können beispielsweise für Rohschinken beispielhaft Tabelle 2 entnommen werden.

Vorteilhaft wird das Lebensmittel zwischen den einzelnen Druckbehandlungen unter Atmosphärendruck und/oder in normaler Umgebungsatmosphäre oder in anderen geeigneten Atmosphären gelagert.

Bevorzugt kann die Druckbehandlung bei gegenüber der Umgebungstemperatur geringeren Temperatur, beispielsweise bei ca. zwischen 0 und 10° C, insbesondere ca. zwischen 2 und 5° C erfolgen.

Das erfindungsgemäße Verfahren hat unter anderem folgende Vorteile:
- Beschleunigte Umrötung des Fleischs durch die Kombination von hohem Druck mit geeigneter Gasatmosphäre, wie beispielsweise reinem Sauerstoff oder Stickstoff.
- Bessere und stabile Farbhaltung von Pökelrot.
- Durch den langsamen Anstieg und Abbau des Drucks kommt es zu keiner Zerstörung der Zellen und das Wasser wird im Produkt gebunden. Damit reduziert sich der Tropfsaftverlust des Produkts deutlich.
- Der geringe Tropfsaftanteil bewirkt eine erhöhte mikrobielle Stabilität und somit auch Haltbarkeit, da das verfügbare Wasser gebunden ist und Mikroorganismen nicht zur Verfügung steht.
- Durch den geringen Tropfsaftverlust bleibt das Produkt deutlich saftiger.
- Bei gepökeltem Einlagefleisch, wie z.B. Bierschinkenwürfeln ist eine bessere Bindung bei der Herstellung von Brühwürsten ermöglicht.
- Im Vergleich zu herkömmlich hergestellten Produkten verbesserte Sensorik (Zartheit, Saftigkeit).

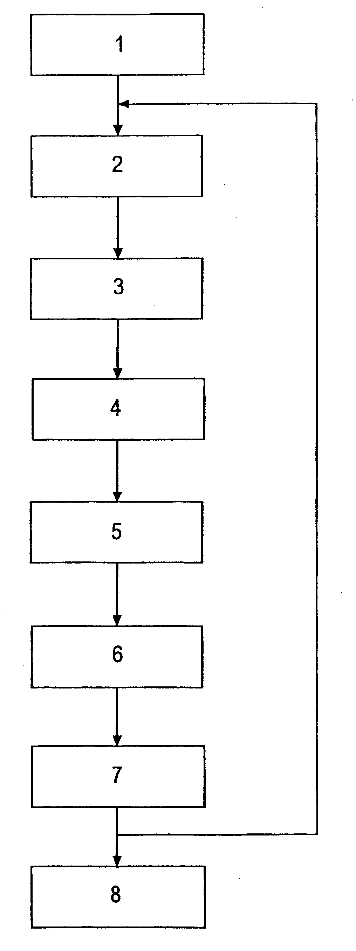

In der beigefügten Figur ist der grundsätzliche Verfahrensablauf der Erfindung in einzelnen Unterschritten anhand eines Blockdiagramms schematisch dargestellt.

In Schritt 1 wird das zu behandelnde Lebensmittel mit den Zusatzstoffen versehen. Beispielsweise wird die Oberfläche des Lebensmittels mit den Zusatzstoffen eingerieben und/oder es werden Zusatzstoffe in das Innere des Lebensmittels injiziert.

In Schritt 2 wird das derart behandelte Lebensmittel in eine druckdicht verschließbare Druckkammer eingebracht, welche anschließend verschlossen wird.

In Schritt 3 wird innerhalb der Druckkammer durch Zuführen einer entsprechenden Gasatmosphäre ein gewünschter Druck, beispielsweise 15 bar erzeugt. Dabei kann vor Aufbauen des Drucks die nach Verschließen der Druckkammer in dieser enthaltene Umgebungsatmosphäre abgesaugt werden. Grundsätzlich ist es auch möglich, dass der entsprechende hohe Druck ohne eine solche Absaugung durch Einblasen einer von der Umgebungsatmosphäre verschiedenen, die gewünschte Zusammensetzung besitzenden Gasatmosphäre erzeugt wird. Aufgrund des letztlich entstehenden hohen Drucks ist die zugeführte Menge der gewünschten Gasatmosphäre wesentlich größer als die Menge der ursprünglich in der Druckkammer enthaltenen Umgebungsatmosphäre, so dass diese für die Zusammensetzung des letztlich in der Kammer entstehenden Gasgemisches vernachlässigt werden kann.

In Schritt 4 wird der Druck über die gewünschte Lagerzeit gehalten. Grundsätzlich ist es auch möglich, dass eine gewisse Variation des Drucks während der Lagerzeit durchgeführt wird, wobei jedoch ein vorgegebener Mindestdruck nicht unterschritten wird.

In Schritt 5 wird der Druck wieder langsam abgebaut, bis Umgebungsdruck erreicht wird. Dies kann beispielsweise durch steuerbare Ablassventile erreicht werden. Nach entsprechendem Druckausgleich mit der Umgebungsatmosphäre wird in Schritt 6 die Druckkammer geöffnet und das behandelte Produkt entnommen.

Je nach Anwendungsfall kann anschließend in Schritt 7 ein Zwischenschritt, beispielsweise eine Reifung in einer Reifekammer vorgesehen sein. Nach diesem Zwischenschritt kann anschließend wieder gemäß Schritt 2 das Produkt in die Druckkammer eingebracht und einer erneuten Druckbehandlung unterzogen werden. Diese Abfolge von Druckbehandlung und Zwischenlagerung kann auch mehrfach wiederholt werden.

Letztlich kann in einem Schritt 8, falls erforderlich, eine weitere Nachbehandlung durchgeführt werden. Je nach Anwendung kann der Zwischenschritt 7 und die wiederholte Anwendung des Verfahrens auch entfallen, so dass unmittelbar nach Entnahme des Produkts gemäß Schritt 6 gegebenenfalls eine Nachbehandlung gemäß Schritt 8 durchgeführt wird.

## Patentansprüche

1. Verfahren zur Behandlung von Lebensmitteln wie Frischfleisch, Fleischwaren, Fleischerzeugnissen, Fleischzubereitungen und Fisch, bei dem das Lebensmittel an seiner Oberfläche mit einem oder mehreren Zusatzstoffen versehen wird, welche zum Eindringen in das Innere des Lebensmittels vorgesehen sind, wobei das mit den Zusatzstoffen versehene Lebensmittel in einem luftdicht verschließbaren Raum in einer von der Außenatmosphäre verschiedenen Gasatmosphäre während einer vorgegebenen Zeit behandelt wird,
**dadurch gekennzeichnet,**
**dass** das Lebensmittel in dem luftdicht verschließbaren Raum ohne Tumbeln gelagert wird und während der Lagerung in dem luftdicht verschließbaren Raum ein über dem Atmosphärendruck liegender Druck aufgebaut wird, durch den ein Eindringen der Zusatzstoffe in das Innere des Lebensmittels bei gleichzeitig schonenderer Behandlung gegenüber einer Verwendung eines Tumblers erfolgt, wobei der Druck so hoch gewählt wird, dass das Lebensmittel im Wesentlichen vollständig von den Zusatzstoffen durchdrungen wird.

2. Verfahren nach Anspruch 1
**dadurch gekennzeichnet,**
**dass** der Druck über die Lagerungszeit im Wesentlichen konstant gehalten wird.

3. Verfahren nach zumindest einem der Ansprüche 1 oder 2,
**dadurch gekennzeichnet,**
**dass** der Druck über die Lagerungszeit variiert wird.

4. Verfahren nach zumindest einem der vorhergehenden Ansprüche,
**dadurch gekennzeichnet,**
**dass** der Aufbau und/oder der Abbau des Drucks und/oder ggf. die Variation des Drucks so langsam erfolgt, dass keine Zerstörung von Zellen des Lebensmittels auftritt.

5. Verfahren nach zumindest einem der vorhergehenden Ansprüche,
**dadurch gekennzeichnet,**
**dass** die Gasatmosphäre in dem Raum auf einen Überdruck gegenüber dem Atmosphärendruck von mehr als ca. 3 bar (300 kPa), insbesondere von mehr als ca. 6 bar (600 kPa), vorzugsweise von mehr als ca. 10 bar (1 MPa), vorteilhaft von mehr als ca. 15 bar (1,5 MPa) gebracht wird.

6. Verfahren nach zumindest einem der vorhergehenden Ansprüche,
**dadurch gekennzeichnet,**
**dass** die Gasatmosphäre in dem Raum zumindest als Hauptbestandteil oder ausschließlich ein Schutzgas, insbesondere Sauerstoff, Stickstoff, Kohlendioxid, Schwefeldioxid, Argon, Helium, Wasserstoff, Distickstoffmonoxid oder eine Kombination von zwei oder mehreren dieser Gase umfasst.

7. Verfahren nach zumindest einem der vorhergehenden Ansprüche,
**dadurch gekennzeichnet,**
**dass** die Zusatzstoffe Kochsalz, Nitritpökelsalz, Salpeter, Zucker, Kräuter, Gewürze, Pflanzenextrakte, Öl, Aromen oder eine Kombination von zwei oder mehreren dieser Stoffe umfassen und/ oder
**dass** die Zusatzstoffe durch eine Marinade gebildet werden.

8. Verfahren nach zumindest einem der vorhergehenden Ansprüche,
**dadurch gekennzeichnet,**
**dass** die Zusatzstoffe im Wesentlichen frei von Phosphaten oder sonstigen die Wasserbindung erhöhenden Stoffen sind.

9. Verfahren nach zumindest einem der vorhergehenden Ansprüche,
**dadurch gekennzeichnet,**
**dass** nach der Lagerung das Lebensmittel einer weiteren Verarbeitung unterzogen, insbesondere geräuchert, gebraten, gekocht oder eingelegt wird
und/ oder
**dass** die Dauer der Druckbehandlung ca. zwischen 2 und 48 Stunden, insbesondere ca. zwischen 5 und 30 Stunden beträgt.

10. Verfahren nach zumindest einem der vorhergehenden Ansprüche,
**dadurch gekennzeichnet,**
**dass** das Lebensmittel mehreren Druckbehandlungen gemäß einem oder mehreren der vorhergehenden Ansprüche unterzogen wird, die zeitlich voneinander getrennt sind.

11. Verfahren nach Anspruch 10,
**dadurch gekennzeichnet,**
**dass** zwischen den einzelnen Druckbehandlungen jeweils ein Reifungszwischenschritt, insbesondere in einer Reifekammer, vorgesehen ist, und insbesondere dass die Dauer der Reifungszwischenschritte jeweils ca. zwischen 1 und 14 Tagen, insbesondere ca. zwischen 5 und 10 Tagen, bevorzugt ca. 7 Tage beträgt.

12. Verfahren nach Anspruch 10 oder 11,
**dadurch gekennzeichnet,**
**dass** das Lebensmittel zwischen den einzelnen Druckbehandlungen unter Atmosphärendruck und/oder in normaler Umgebungsatmosphäre oder in anderen geeigneten Atmosphären gelagert wird.

## Claims

1. A method of treating foods such as fresh meat, meat articles, meat products, meat preparations and fish, wherein the food is provided at its surface with one or more additives which are provided for penetrating into the interior of the food, wherein the food provided with the additives is treated in a space, which can be closed in an air-tight manner, in a gas atmosphere different from the exterior atmosphere during a predefined time,
**characterised in that**
the food is stored in the space, which can be closed in an air-tight manner, without tumbling and a pressure disposed above atmospheric pressure is built up in the space, which can be closed in an air-tight manner, during the storage, by which pressure a penetration of the additives into the interior of the food takes place during a simultaneously more gentle treatment with respect to a use of a tumbler, with the pressure being selected so high that the food is substantially completely permeated by the additives.

2. A method in accordance with claim 1,
**characterised in that**
the pressure is kept substantially constant over the storage time.

3. A method in accordance with at least one of the claims 1 or 2,
**characterised in that**
the pressure is varied over the storage time.

4. A method in accordance with at least one of the preceding claims,
**characterised in that**
the build-up and/or the reduction of the pressure and/or, optionally, the variation of the pressure, takes place so slowly that no destruction of cells of the food occurs.

5. A method in accordance with at least one of the preceding claims,
**characterised in that**
the gas atmosphere in the space is brought to an overpressure with respect to the atmospheric pressure of more than approximately 3 bar (300 kPa), in particular of more than approximately 6 bar (600 kPa), preferably of more than approximately 10 bar (1 MPa), advantageously of more than approximately 15 bar (1.5 MPa).

6. A method in accordance with at least one of the preceding claims,
**characterised in that**
the gas atmosphere in the space comprises at least as a main component or exclusively an inert gas, in particular oxygen, nitrogen, carbon dioxide, sulphur dioxide, argon, helium, hydrogen, dinitrogen monoxide or a combination of two or more of these gases.

7. A method in accordance with at least one of the preceding claims,
**characterised in that**
the additives comprise common salt, nitrite curing salt, salpetre, sugar, herbs, spices, vegetable extracts, oil, flavours or a combination of two or more of these substances;
and/or
**in that** the additives are formed by a marinade.

8. A method in accordance with at least one of the preceding claims,
**characterised in that**
the additives are substantially free of phosphates or of other substances increasing the water binding.

9. A method in accordance with at least one of the preceding claims,
**characterised in that**
the food is subjected to a further processing, is in particular smoked, roasted, boiled or preserved, after the storage;
and/or
**in that** the length of time of the pressure treatment amounts to approximately between 2 and 48 hours, in particular to approximately between 5 and 30 hours.

10. A method in accordance with at least one of the preceding claims,
**characterised in that**
the food is subjected to a plurality of pressure treatments in accordance with one or more of the preceding claims which are separate from one another in time.

11. A method in accordance with claim 10,
**characterised in that**
a respective intermediate maturation step is provided, in particular in a maturation chamber, between the individual pressure treatments; and in particular **in that** the lengths of time of the intermediate maturation steps amount in each case to approximately between 1 and 14 days, in particular to approximately between 5 and 10 days, preferably to approximately 7 days.

12. A method in accordance with claim 10 or claim 11,
**characterised in that**
the food is stored at atmospheric pressure and/or in the normal environmental atmosphere or in another suitable atmosphere between the individual pressure treatments.

## Revendications

1. Procédé pour le traitement de produits alimentaires tels que viande fraîche, charcuterie, produits à base de viande, préparations camées et poissons, dans lequel le produit alimentaire est doté sur sa surface d'un ou plusieurs adjuvants qui sont prévus pour pénétrer dans l'intérieur du produit alimentaire, dans lequel le produit alimentaire doté des adjuvants est traité dans une chambre susceptible d'être fermée de manière étanche à l'air, pendant un temps prédéterminé sous une atmosphère gazeuse différente de l'atmosphère extérieure,
**caractérisé en ce que**
le produit alimentaire est entreposé dans la chambre fermée de manière étanche à l'air sans être brassé et on établit pendant le stockage dans la chambre fermée de manière étanche à l'air une pression située au-dessus de la pression atmosphérique, au moyen de laquelle se produit une pénétration des adjuvants dans l'intérieur du produit alimentaire avec un traitement simultanément ménageant, par rapport à une utilisation d'un dispositif de brassage, et la pression est choisie aussi élevée que le produit alimentaire est essentiellement entièrement traversé par les adjuvants.

2. Procédé selon la revendication 1,
**caractérisé en ce que** la pression est maintenue sensiblement constante pendant la durée de stockage.

3. Procédé selon l'une au moins des revendications 1 ou 2,
**caractérisé en ce que** la pression est variée pendant la durée de stockage.

4. Procédé selon l'une au moins des revendications précédentes,
**caractérisé en ce que** l'établissement et/ou la chute de pression et/ou le cas échéant la variation de la pression a lieu aussi lentement qu'il ne se produit aucune destruction de cellules du produit alimentaire.

5. Procédé selon l'une au moins des revendications précédentes,
**caractérisé en ce que** l'atmosphère gazeuse dans la chambre est amenée à une surpression, par rapport à la pression atmosphérique, de plus de 3 bars (300 kPa) environ, en particulier plus de 6 bars (600 kPa) environ, de préférence plus de 10 bars (1 mPa) environ, et avantageusement de plus de 15 bars (1,5 mPa) environ.

6. Procédé selon l'une au moins des revendications précédentes,
**caractérisé en ce que** l'atmosphère gazeuse dans la chambre inclut au moins à titre de composante principale ou exclusivement un gaz protecteur, en particulier oxygène, azote, dioxyde de carbone, dioxyde de soufre, argon, hélium, hydrogène, oxyde nitreux, ou une combinaison de deux ou plusieurs de ces gaz.

7. Procédé selon l'une au moins des revendications précédentes,
**caractérisé en ce que**
les adjuvants incluent sel de cuisine, sel nitrité pour saumure, salpêtre, sucre, herbes, épices, extraits de plantes, huiles, arômes ou une combinaison de deux ou plusieurs de ces produits, et/ou les adjuvants sont formés par une marinade.

8. Procédé selon l'une au moins des revendications précédentes,
**caractérisé en ce que** les adjuvants sont essentiellement exempts de phosphate ou autres produits augmentant la rétention d'eau.

9. Produit selon l'une au moins des revendications précédentes,
**caractérisé en ce qu'**après stockage le produit alimentaire est soumis à un autre traitement, en particulier fumé, grillé, cuit ou mariné,
et/ou **en ce que** la durée du traitement sous pression est environ entre 2 et 48 heures, en particulier environ entre 5 et 30 heures.

10. Procédé selon l'une au moins des revendications précédentes,
**caractérisé en ce que** le produit alimentaire est soumis à plusieurs traitements sous pression selon l'une ou plusieurs des revendications précédentes, qui sont séparés temporellement les uns des autres.

11. Procédé selon la revendication 10,
**caractérisé en ce qu'**il est prévu entre les traitements sous pression individuels une étape intermédiaire de maturation respective, en particulier dans une chambre de maturation, et en particulier **en ce que** la durée des étapes intermédiaires de maturation s'élève respectivement environ entre 1 et 14 jours, en particulier environ entre 5 et 10 jours, de préférence environ 7 jours.

12. Procédé selon la revendication 10 ou 11,
**caractérisé en ce que** le produit alimentaire est stocké, entre les traitements sous pression individuels, sous pression atmosphérique et/ou dans une atmosphère environnante normale ou sous d'autres atmosphères appropriées.
